**Europäisches Patentamt**

**European Patent Office**

**Office européen des brevets**

(19)

(11) Veröffentlichungsnummer: **0 157 018**
A1

# (12) EUROPÄISCHE PATENTANMELDUNG

(21) Anmeldenummer: **84116510.3**

(22) Anmeldetag: **31.12.84**

(51) Int. Cl.⁴: **F 01 B 29/02**

(30) Priorität: **11.01.84 DE 3400666**

(43) Veröffentlichungstag der Anmeldung: **09.10.85**
**Patentblatt 85/41**

(84) Benannte Vertragsstaaten: **AT BE CH FR GB IT LI LU NL SE**

(71) Anmelder: **Rutard, Pierre, Iltisweg 10,
D-7022 Leinfelden-Echterdingen Musberg (DE)**

(72) Erfinder: **Rutard, Pierre, Iltisweg 10,
D-7022 Leinfelden-Echterdingen Musberg (DE)**

(54) **Energiewandler.**

(57) Ein Taumelscheibengetriebe mit einer kugelbeweglich, jedoch drehfest gelagerten Taumelscheibe (16), von der die Abtriebsbewegung abgenommen wird und die von einem Gehäuse (5) umfaßt ist, das von einem Außendruck beaufschlagt wird, der höher als der Druck innerhalb dieses Gehäuses (5) ist, erhält eine leichtgängigere Steuerung durch eine flügelartige Ausbildung der Taumelscheibe (16), eine volumenneutrale, nahezu druckverlust- und reibungsfreie Abdichtung der Herausführung des Abtriebs über den Mittelpunkt der Gehäuseaufhängung, eine bessere Dynamik durch das sich mitdrehende Druckbad sowie durch eine zweite Arbeitsfläche, die das Taumelscheibengehäuse (5) bis zu einem begrenzten Freiheitsgrad nach allen Seiten raumneutral schwenken läßt und die Parallelhaltung zur Elevation der Taumelscheibe (16) mit geringem Kraftaufwand erleichtert und vereinfacht.

Pierre Rutard

7022 Leinfelden-Echterdingen
(Musberg)
Iltisweg 10
Tel.: 0711 - 75 56 32

0157018

Europäisches Patentamt
Erhardtstr. 27

8000 München 2                    27. November 1984

TITLE MODIFIED
see front page

P a t e n t a n m e l d u n g

**Taumelscheibengetriebe mit einer kugelbeweglich, jedoch drehfest gelagerten Taumelscheibe zur Nutzung einer Leistungsverstärkung auf der Basis einer zu steuernden Druckunterschieds-Kraftmaschine für Antriebe aller Art**

Ein deutsches Patent wurde unter der Nr. DE 3400666 C 1 erteilt vom Deutschen Patentamt.

Die Erfindung bezieht sich auf ein Taumelscheibengetriebe mit einer kugelbeweglich, jedoch drehfest gelagerten Taumelscheibe, von der die Abtriebsbewegung abgenommen wird und die von einem Gehäuse umfaßt ist, das von einem Außendruck beaufschlagt wird, der höher als der Druck innerhalb dieses Gehäuses ist. Dieses Taumelscheibengetriebe erhält eine leichtgängigere Steuerung durch eine flügelartige Ausbildung der Taumelscheibe, eine Abdichtung des Trägerschaftes bis zur Höhe des Mittelpunktes der Gehäuseaufhängung sowie durch eine zweite Arbeitsfläche.

Der vorliegenden Erfindung liegt die Aufgabe zugrunde, ein Taumelscheibengetriebe zu schaffen, das imstande ist, beispielsweise höheren als atmosphärischen Druck bei Umwandlung in mechanische

-2-

Energie zu nutzen. Diese Aufgabe wird durch ein Taumelscheibengetriebe gemäß den Kennzeichen des Anspruchs 1 gelöst.

Durch die US-Patentschrift 1330393 ist bereits ein Taumelscheibengetriebe bekannt. Dieses Getriebe hat einzig und allein die Funktion
eines stufenlosen Getriebes mit einer Primär- und einer Sekundärwelle sowie Zwischenschaltung einer im Winkel (zur stufenlosen Drehgeschwindigkeitsvariation der getriebenen Wellen) verstellbaren Taumelscheibe. So ist dieses Taumelscheibengetriebe nur in der Lage,
die Eingangsenergie abzüglich Verlusten gewandelt drehzahlgeregelt
in die Sekundärwelle zu übertragen.

Der Erfindung wurden im Prüfungsverfahren des Deutschen Patentamts folgende Druckschriften entgegengehalten:
DE-AS 12 25 204 und DE-OS 27 13 179.

Eine etwa flügelartige Ausbildung weist zwar auch eine Taumelscheibe nach der Entgegenhaltung DE-AS 12 25 204 auf, jedoch bestehen geometrische Unterschiede, da die in der vorliegenden Anmeldung enthaltene Aufgabe bei diesem bekannten Getriebe nicht
gegeben ist.

Dagegen geht die Erfindung von einem Taumelscheibengetriebe aus,
wie es aus der Deutschen Offenlegungsschrift 27 13 179 bekannt ist.
Durch dieses Taumelscheibengetriebe wird erreicht, daß mindestens
eine Taumelscheibe mit einem vorbestimmten, festen und nicht verstellbaren Anschlagwinkel als Trennungs- und Arbeitsglied zwischen
zwei Kammern unterschiedlichen Drucks eingesetzt wird. Im mit
höherem Druck beaufschlagten Arbeitsbereich (Arbeitsfläche) werden
die unterschiedlichen Druckverhältnisse ständig an anderem Ort
und zeitlich in Relation zueinander gesteuert, wobei der höhere
und einmalig gespeicherte Druck, von der Steuerung und etwaigen
Verlustquellen abgesehen, ohne Raumveränderung die mit Druck beaufschlagte Sektion der Taumelscheibe zum Anschlag zwingt. Da die
Steuerung lediglich die Aufgabe hat, die mit höherem Druck beaufschlagte Arbeitsfläche durch dissipative Energiezufuhr ohne Übergang auf den Arbeitskreis parallel zur Elevation der Taumelscheibe fortschreitend und mit weit weniger Kraftaufwand als der auf der Arbeitsfläche lastende höhere Druck auch gegen die Erdschwere zu verschieben, wandert die Taumelscheibe zu einem kontinuierlichen und ebenso fortschreitenden Anschlag. Es entsteht ein Dauertaumeln, das zur Drehbewegung in einem Leistungsverstärker (und nicht als Geschwindigkeitsregelung wie beim US-Patent) genutzt wird. Dabei ist es vorteilhaft, wenn die Membran (Arbeitsfläche) über Rollen mit sehr guter Gleitfähigkeit an der Taumelscheibe angreift, weil eine verminderte Rollreibung für die Parallelverschiebung der auf der Arbeitsfläche lastenden Druckkraft (auch gegen die Erdschwere) bei guter Ausführung weit kleiner als die Summe der örtlich und zeitlich zu verschiebenden Kraft, die die Taumelscheibe antreibt (zum Anschlag zwingt), sein kann. Prinzipiell wie bei der Wärmepumpe wird hier die Energie mittels eines vom Arbeitskreis völlig entkoppelten Steuerkreises aus der Umgebung durch Transport gewonnen.

Die Steuerung dieses bekannten Taumelscheibengetriebes ist verhältnismäßig schwerfällig; es ist daher die Aufgabe, die Steuerung leichtgängiger auszubilden.

Zur Lösung dieser Aufgabe wird die Taumelscheibe gemäß dem Kennzeichen des Anspruchs 1 ausgebildet.

Weitere Verbesserungen der Steuerung und der Konstruktion sind in den Unteransprüchen angegeben.

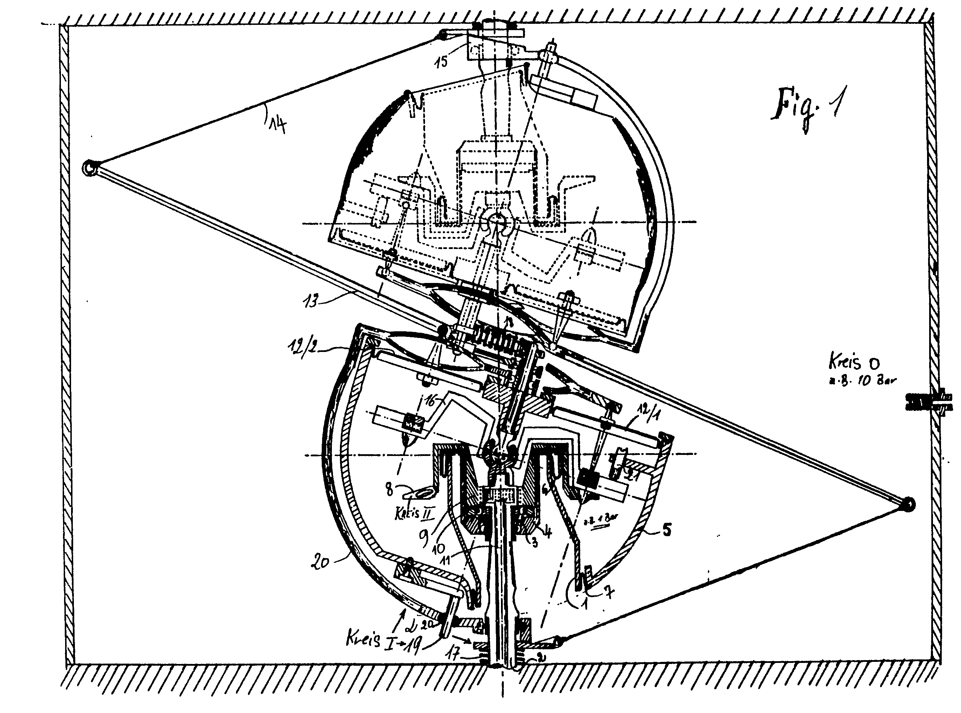

Ein Ausführungsbeispiel wird nachstehend anhand der Zeichnung Fig. 1 beschrieben, die einen Schnitt einer als Tandem ausgebildeten Getriebeanordnung darstellt.

Die Taumelscheibe 16 wird flügelartig ausgebildet, so daß die Abdichtung der unteren Taumelscheibengehäusehälften über den Mittelpunkt der Gehäuseaufhängung greift. Dadurch wird erreicht, daß bei einer Pendelbewegung des Gehäuses 5 der Weg des Abdichtungs-

0157018

rohres 1 neutral bleibt und somit keine Volumenveränderung verursachen kann. An jeder Anlage ist eine abgedichtete 3 Drehvorrichtung 4 vorgesehen, an deren obigem Ende das Abdichtungsrohr mit einer Membran 6 nicht starr verbunden ist. Eine zweite, gleiche Membranverbindung 7 mit dem Gehäuse 5 und dem Abdichtungsrohr 1 bezweckt eine nicht starre, im Druckbad schwebende und absolut raumneutrale Abdichtung. Der Durchmesser und die entsprechende Form des Rohres (beispielsweise oval) werden in der Konstruktion so ausgelegt, daß ein ausreichender Vorlauf der Arbeitsflächen 12 sichergestellt ist.

Der Arbeitskreis II erhält seine Drehbewegung über einen Kranz 8, in den die Verzahnung an der Unterseite jeder Taumelscheibe beim Taumeln bis zum Tiefstpunkt hineingreift. Dieser Kranz, der seine drehbare Aufhängung 9 über der Abdichtvorrichtung 4 am Trägerschaft hat, leitet die Drehbewegung beispielsweise durch den Schaft hindurch mittels Gestänges 11 heraus.

Jedes Gehäuse erhält zwei sich gegenüberliegende Arbeitsflächen. Die Arbeitsfläche 12/1 stützt sich, gut gelagert oder auf einem abstoßenden Magnetkern, direkt auf der Taumelscheibe ab. Die Arbeitsfläche 12/2 wird aufgrund des Hebelgesetzes zum größten Teil auf die Arbeitsfläche 12/1 übertragen. Sinn und Zweck dieser Sekundärarbeitsfläche ist eine kleine Leistungserhöhung der Druck-(Arbeits-)flächen einerseits, in erster Linie aber die 100%ige Stabilisierung des Gehäuses 5. Der jeweilige Hebel 13 wird mittels eines Seiles 14 über eine Nocke 15 drehbar geführt. Beim Vorlauf der Arbeitsflächen muß die Nocke die neutrale Höhe von 12/2 raumgleich sicherstellen. Eine stabilisierende Feder 17 wird eingebaut. Hebel 13 und Steuerungsbügel 20 haben ovale Aussparungen wegen des Vorlaufs. Die Eingangsdrehbewegung kann durch die Mitte hindurch über die Antriebskette 18 oder einen beliebigen anderen Eingangsantrieb von der Welle 19 in einem Schwenklager 20 erfolgen. Elektronik kann den Steuerungsbügel im Verhältnis zum Vorlauf über den Fühler 21 sichern.

Die Parallelität beider Anlagen zueinander kann konstruktionsbedingt über zusätzliche, beispielsweise sich gegenseitig zurückwerfende Führungen erfolgen.

Hierzu 1 Blatt Zeichnungen Fig. 1

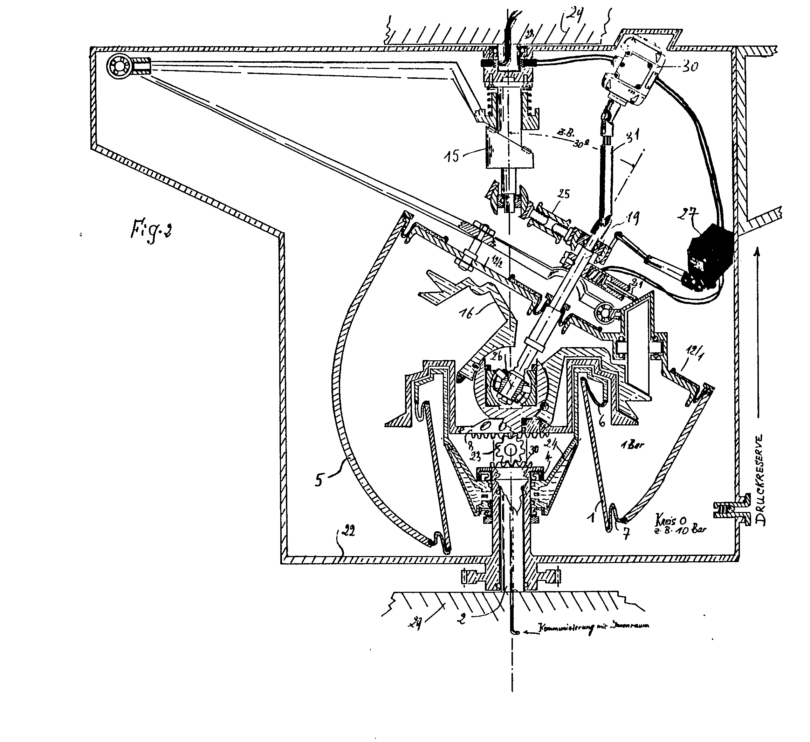

Die mit Fig. 1 beschriebene Tandemausführung soll mit Fig. 2 als einfache Anlage, ohne Tandem, nochmals auf die Vorteile einer vereinfachten Konstruktion und einer Effektivierung durch folgende ergänzende Alternativen erläutert werden:

Die Herausführung des Abtriebes kann ebenso außerhalb des Trägerschaftes 2 und an diesem drehbar gelagert in einem Guß mit dem Überdruckaußenbehälter 22 erfolgen. In diesem Fall erhält das Überdruckgehäuse 22 um die mit Stromkollektor ausgerüstete Sockelwelle 28 seine zweite drehbare Aufhängung in einem Guß. Das heißt, bis auf die Abdichtung 4 ist der Überdruckbehälter von innen ausgegangen um den Schaft 2 und die Welle 28 zwischen den Sockeln 29/29 absolut hermetisch und gut ausgewuchtet drehbar aufgehängt. Die untere Lagerung des Überdruckbehälters mündet mit einer Verzahnung 30 oberhalb des durch 4 abgedichteten Innentopfes 24. Die Verzahnung 30 ist in Relation zu der Verzahnung der Krone 8 so ausgelegt, daß über ein an zwei verschiedenen Stellen angreifendes Doppelzahnrad 23 beim Absinken der Taumelscheibe 16 Drehrichtung und Geschwindigkeit von 8 und 30 gleich sind.

Unterhalb der Abdichtung 4 wird der abdichtende Innentopf 24 um die untere Lagerung von 22 drehbar und mit Anschlag nach oben angebracht. Der Innentopf 24 wird durch die hermetische Verbindung 6, 1 und 7 mit dem Taumelscheibengehäuse 5 verbunden und gesteuert.

Die obere Aufhängung des Überdruckgehäuses 22 erhält die für den Vorlauf der Arbeitsflächen erforderliche Höhenausgleichsnocke 15 und setzt sich in Richtung Mittelpunkt als Abstützungswelle fort. Die mit dem Lager 26 schwenkbare und drehbare entkoppelte Eingangsdrehbewegungswelle 19 bildet die hier seitlich nicht sichtbare

—

0157018

Aufhängung des Taumelscheibengehäuses 5. Ein Schwenklagerarm 25 sichert den vorbestimmten Neigungsgrad von der starren Verbindung 19 und 5.

Unabhängig von der Lage der Taumelscheibe wird die absolute Parallelität der Verbindung 19 und 5 im Verhältnis zur entkoppelten Taumelscheibe 16 über eine Fühlvorrichtung 21 und eine am Gehäuse 22 befestigte Regelelektronik 27 gesichert. Ein im Gehäuse 22 befestigter Elektromotor liefert, durch Kollektor von außen gespeist und über Kardanwelle 19 weitergeleitet, die erforderliche Steuerenergie, die die Druckkraft mit einem klein zu haltenden Energieaufwand über eine Sektion der Taumelscheibe 16 hinwegfegt und den Auslösefaktor Kraft x Weg / Zeit im Bereich der Druckunterschieds-Trennwände (aus der Umgebung) verursacht.

Die Alternativkonstruktion (Fig. 2) bietet den Vorteil einer leichter zu realisierenden und nahezu abnutzungsfreien Abdichtung 4 der Herausführung des Abtriebs, weil bis auf den Vorlauf die Teile 4 als Bestandteil von 22 und der abzudichtende Innentopf 24 sich im Gleichschritt drehen. Die Dichtung 4 könnte durch einen kraftarmen Drehstab ersetzt werden, so daß bis auf die evtl. Porosität der Membranen sämtliche Reibungsteile und Druckverlustquellen ausgeschlossen sind, was eine Überdruckreserve für die Erhaltung des Betriebsdrucks entbehrlich macht. Die Gesamtdynamik wird durch Fig. 2 ebenfalls erheblich verbessert, weil sich das Taumelscheibengehäuse 5 innerhalb des sich im Gleichschritt drehenden Druckbades dreht.

Hierzu 1 Blatt Zeichnungen Fig. 2

Patentansprüche

1. Taumelscheibengetriebe mit einer kugelbeweglich, jedoch drehfest gelagerten Taumelscheibe, von der die Abtriebsbewegung abgenommen wird und die von einem Gehäuse umfaßt ist, wobei
die Taumelscheibe über eine Antriebswelle (19) in eine taumelnde Bewegung versetzt wird (verursacht durch den höheren Druck),
das sich drehende Taumelscheibengehäuse 5 von einem Außendruck beaufschlagt wird, der höher ist als der Druck innerhalb
des Gehäuses, und das Gehäuse eine Dichtplatte (12) aufweist,
um den zugeordneten Bereich der Taumelscheibe (16) mit einem
höheren Druck zu beaufschlagen, <u>dadurch gekennzeichnet</u>, daß
die Taumelscheibe (16) so flügelartig geformt ist, daß die Abdichtung (3, 4, 6, 1) den Trägerschaft (2) bis zur Höhe des
Mittelpunktes der Gehäuseaufhängung umgibt.

2. Taumelscheibengetriebe nach Anspruch 1, dadurch gekennzeichnet,
daß eine zweite Arbeitsfläche (12/2) vorgesehen ist.

3. Taumelscheibengetriebe nach Anspruch 1 oder 2, dadurch gekennzeichnet, daß zur Steuerung eine Hebelanordnung (13, 14, 15)
vorgesehen ist.

4. Taumelscheibengetriebe nach Anspruch 3, dadurch gekennzeichnet,
daß die Hebelanordnung (13, 14, 15) eine Nocke (15) zum
Steuerungsausgleich beim Vorlauf aufweist.

5. Taumelscheibengetriebe nach Anspruch 4, dadurch gekennzeichnet,
daß der Abtrieb als fester Bestandteil des Überdruckgehäuses
(22) über ein drehrichtungs- und drehgeschwingigkeitsregelndes
Doppelzahnrad (23) um den Trägerschaft gasdicht und reibungsarm herausgeführt wird.

6. Taumelscheibengetriebe nach Anspruch 5, dadurch gekennzeichnet,
daß das sich gleichschnell mitdrehende Überdruckgehäuse die
Dynamik des Taumelscheibengehäuses (5) stark verbessert und
die Anbringung des mitlaufenden Eingangsantriebs (30) sowie die Anbringung des Parallelitätsreglers (27) erleichtert.

P. Lutard

Fig.2

**Europäisches Patentamt**

**EUROPÄISCHER RECHERCHENBERICHT**

0157018

Nummer der Anmeldung

EP 84 11 6510

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-2 713 179 (P. RUTARD) <br> * Ganzes Dokument * <br><br> --- | 1 | F 01 B 29/02 |
| A | DE-A-2 651 754 (P. RUTARD) <br> * Ganzes Dokument * <br><br> ----- | 1 | |
| | | | **RECHERCHIERTE SACHGEBIETE (Int. Cl.4)** <br><br> F 01 B 29/00 <br> F 03 G 7/00 <br> F 16 H 23/00 |

Der vorliegende Recherchenbericht wurde für alle Patentansprüche erstellt.

| Recherchenort | Abschlußdatum der Recherche | Prüfer |
|---|---|---|
| BERLIN | 30-04-1985 | LEMBLE Y.A.F.M. |